# EUROPÄISCHE PATENTSCHRIFT

(11) **EP 3 488 745 B1**
(45) Veröffentlichungstag und Bekanntmachung des Hinweises auf die Patenterteilung: **07.07.2021**
(21) Anmeldenummer: 18207624.0
(22) Anmeldetag: 21.11.2018
(51) Int. Cl.: A47J 43/07, B01F 7/30

(54) **BEARBEITUNGSELEMENT FÜR EIN KÜCHENMASCHINENWERKZEUG, KÜCHENMASCHINENWERKZEUG, KÜCHENMASCHINENWERKZEUGSATZ UND KÜCHENMASCHINE**
KITCHEN APPLIANCE TOOL, PROCESSING ELEMENT FOR A KITCHEN APPLIANCE TOOL, KITCHEN APPLIANCE TOOL SET AND KITCHEN APPLIANCE
ÉLÉMENT DE TRAITEMENT POUR UN USTENSILE DE ROBOT DE CUISINE, USTENSILE DE ROBOT DE CUISINE, ENSEMBLE D'USTENSILE DE ROBOT DE CUISINE ET ROBOT DE CUISINE

(30) Priorität: 27.11.2017 DE 102017221131
(43) Veröffentlichungstag der Anmeldung: 29.05.2019
(73) Patentinhaber: BSH Hausgeräte GmbH, 81739 München (DE)
(72) Erfinder: Koscak, Ales, 6230 Postojna (SI); Orbanic, Henri, 1000 Ljubljana (SI); Zilnik, Marko, 1218 Komenda (SI); Uplaznik, Marko, 3312 Prebold (SI)

(56) Entgegenhaltungen:
- WO-A1-2013/188925
- US-A1- 2004 240 313
- US-A1- 2007 014 187

## Beschreibung

Die vorliegende Erfindung betrifft ein Bearbeitungselement eines rotierbaren Küchenmaschinenwerkzeugs, ein Küchenmaschinenwerkzeug, einen Küchenmaschinenwerkzeugsatz und eine Küchenmaschine mit mindestens einem Küchenmaschinenwerkzeug.

Eine Vielzahl von Bearbeitungswerkzeugen, die zum Bearbeiten von Lebensmitteln an eine geeignete Küchenmaschine angeschlossen werden können, umfasst jeweils mindestens einen Bearbeitungselement, das dazu eingerichtet ist, das jeweilige Lebensmittel zu verquirlen, zu passieren, zu zerkleinern oder dergleichen, und eine Antriebsstange, die dazu eingerichtet ist, in eine vorgesehene Einstecköffnung der Küchenmaschine eingesteckt und so durch einen Elektromotor der Küchenmaschine angetrieben zu werden. Zum Reinigen des jeweiligen Bearbeitungswerkzeugs kann die Antriebsstange dann von der Küchenmaschine wieder gelöst werden, und bei Bedarf kann ein anderes Bearbeitungswerkzeug mit seiner Antriebsstange in die Einstecköffnung der Küchenmaschine gesteckt werden. Die Küchenmaschine mit den verschiedenen Bearbeitungswerkzeugen ist somit flexibel für verschiedenste Zubereitungsschritte einsetzbar.

Eine solche Küchenmaschine mit einem Bearbeitungselement eines rotierbaren Küchenmaschinenwerkzeugs ist beispielsweise in der WO 2013/188925 A1 offenbart. Die Bearbeitungswerkzeuge mit ihren Antriebsstangen sind jedoch oft sperrig und beanspruchen entsprechend viel Stauraum. Zudem haben sie ein vermeidbar hohes Gewicht.

Der vorliegenden Erfindung liegt die Aufgabe zugrunde, eine Technik bereitzustellen, mit der ein benötigter Stauraum für Bearbeitungswerkzeuge einer Küchenmaschine sowie das Gewicht eines Werkzeugsatzes verschiedener Bearbeitungswerkzeuge vermindert werden kann.

Die Aufgabe wird gelöst durch ein Küchenmaschinenwerkzeug gemäß Anspruch 1. Vorteilhafte Ausführungsformen sind in den Unteransprüchen, der Beschreibung und den Figuren offenbart.

Ein erfindungsgemäßes Küchenmaschinenwerkzeug dient einer Verwendung als rotierbares Werkzeug einer Küchenmaschine. Es umfasst ein Bearbeitungselement und eine Antriebsstange, die mittels mindestens eines Verbindungselements lösbar und drehfest (beispielsweise form- und/oder kraftschlüssig, insbesondere mittels einer Verrastung) miteinander verbunden oder zu verbinden sind.

Die Antriebsstange eines erfindungsgemäßen Küchenmaschinenwerkzeugs kann ihrerseits dauerhaft oder lösbar mit einem Werkzeugelement verbunden sein und mit diesem ein eigenständiges weiteres Bearbeitungswerkzeug für die Küchenmaschine ausbilden. Auf diese Weise sind dann also das Bearbeitungselement und das Werkzeugelement dazu eingerichtet, beide mit derselben Antriebsstange zur Rotation gebracht zu werden: In eine entsprechende Einstecköffnung der Küchenmaschine eingesteckt kann die Antriebsstange nämlich einerseits allein das mit ihr verbundene Werkzeugelement an den Elektromotor der Küchenmaschine anschließen, andererseits kann sie, wenn sie mittels des mindestens einen Befestigungselements des Bearbeitungselements mit diesem verbunden ist, dessen Rotation antreiben.

Insbesondere bevorzugt ist eine Ausführungsvariante, bei der die Antriebsstange dauerhaft mit einem Knethaken, einem Rührbügel (der z.B. mindestens teilweise aus einem soliden Material bestehen kann) oder einer Rührschlinge (z.B. aus Draht) verbunden ist; derartige Werkzeugelemente sind besonders schlicht ausgebildet und fügen sich daher gut in ein jeweils anderes Bearbeitungselement (wie beispielsweise einen Quirl oder Schneebesen) ein.

Das Bearbeitungselement des Küchenmaschinenwerkzeugs kann insbesondere ein erfindungsgemäßes Bearbeitungselement gemäß einer der in dieser Schrift offenbarten Ausführungsformen sein, zur Verbindung mit der Antriebsstange also mindestens ein Befestigungselement aufweisen, das dann ein "Verbindungselement" darstellt.

Alternativ oder zusätzlich kann mindestens ein Verbindungselement des erfindungsgemäßen Küchenwerkzeugs an der Antriebsstange und/oder an einem mit der Antriebsstange verbundenen Werkzeugelement angeordnet sein. Die oben für das Befestigungselement eines Bearbeitungselements genannten Ausführungsbeispiele gelten für ein derart an der Antriebsstange bzw. ein mit der Antriebsstange verbundenen Werkzeugelement angeordnetes Verbindungselement analog. Insbesondere kann ein solches Verbindungselement mindestens teilweise aus einem federnden Material, beispielsweise einem Metallblech oder einem Kunststoff bestehen und/oder mindestens eine Rastzunge, mindestens eine Vertiefung und/oder mindestens einen Spalt jeweils zur Aufnahme einer Rastzunge, mindestens ein Element eines Bajonettverschlusses und/oder eine Haltetasche umfassen.

Ein erfindungsgemäßer Küchenmaschinenwerkzeugsatz umfasst ein erfindungsgemäßes Küchenmaschinenwerkzeug gemäß einer der in dieser Schrift offenbarten Ausführungsformen. Das Bearbeitungselement des Küchenmaschinenwerkzeugs ist dabei ein erstes Bearbeitungselement, und der Küchenmaschinenwerkzeugsatz umfasst weiterhin mindestens ein zweites mit der Antriebsstange lösbar und drehfest zu verbindendes Bearbeitungselement. Dieses weist dabei eine andere Größe und/oder einen anderen Typus auf als das erste Bearbeitungselement.

Die Antriebsstange des Küchenmaschinenwerkzeugs kann somit bei einem erfindungsgemäßen Küchenmaschinenwerkzeugsatz wahl- und wechselweise für das erste oder auch für das zweite Bearbeitungselement verwendet werden; auf eine jeweils eigene Antriebsstange für beide Bearbeitungselemente kann damit verzichtet werden, was eine Einsparung an Stauraum und Gewicht sowie - bei der Herstellung - an Material bedeutet. Ist die Antriebstange ihrerseits mit einem Werkzeugelement verbunden, umfasst der Küchenmaschinenwerkzeugsatz somit mindestens drei Werkzeuge für die Küchenmaschine, die eine gemeinsame Antriebsstange aufweisen.

Eine erfindungsgemäße Küchenmaschine umfasst eine Basisstation (die insbesondere einen Elektromotor, ein Getriebe und ein Gehäuse mit einer Einstecköffnung für eine Antriebsstange aufweist) und ein (zur Basisstation passendes) erfindungsgemäßes Küchenmaschinenwerkzeug gemäß einer der in dieser Schrift offenbarten Ausführungsformen.

Insbesondere kann eine erfindungsgemäße Küchenmaschine vorzugsweise sogar einen erfindungsgemäßen Küchenmaschinenwerkzeugsatz umfassen.

Vorteilhafterweise ist das Bearbeitungselement ein Element eines rotierbaren Küchenmaschinenwerkzeugs; es kann beispielsweise einen Schneebesen, einen Rührquirl, eine Rührschlinge oder einen Rührbügel (insbesondere einen Flexi-Rührbesen, dessen - bezogen auf eine vorgesehene Rotationsachse - radial äußerer Bereich mindestens teilweise aus einem flexiblen Kunststoff besteht) umfassen. Das Bearbeitungselement weist mindestens ein Befestigungselement zur lösbaren, drehfesten Verbindung mit einer Antriebsstange des Küchenmaschinenwerkzeugs auf. Das Küchenmaschinenwerkzeug mit dem Bearbeitungselement und der Antriebsstange kann dann, wenn die Antriebsstange in eine Einstecköffnung einer Küchenmaschine gesteckt ist, mittels deren Elektromotors zur Rotation gebracht werden.

Gemäß einer vorteilhaften Ausführungsform umfasst das mindestens eine Befestigungselement ein Ringelement (das geschlossen oder offen, also als Teilring ausgebildet sein kann) und/oder einen Schlitzteller, das/der jeweils dazu eingerichtet ist, die Antriebsstange ganz oder teilweise zu umgreifen. Ein derartiges Ringelement bzw. ein derartiger Schlitzteller kann dabei insbesondere als flache oder (z.B. kuppelartig) gewölbte Scheibe mit einem Loch bzw. einem Einschnitt ausgebildet sein, durch das/den hindurch die Antriebsstange geführt werden kann.

Alternativ oder zusätzlich kann das mindestens eine Befestigungselement wenigstens ein Halterungselement für ein mit der Antriebsstange (dauerhaft oder lösbar) verbundenes Werkzeugelement eines (weiteren) Bearbeitungswerkzeugs für die Küchenmaschine umfassen.

Das mindestens eine Befestigungselement kann dazu eingerichtet sein, mit einem passenden Fixierelement zusammenzuwirken, das an der Antriebsstange selbst und/oder am ggf. mit der Antriebsstange verbundenen Werkzeugelement angeordnet sein kann.

Das mindestens eine Befestigungselement kann insbesondere zur form- und/oder kraftschlüssigen Verbindung (beispielsweise zur Verrastung) des Bearbeitungselements mit der Antriebsstange bzw. einem ggf. mit diesem verbundenen Werkzeugelement dienen.

Gemäß speziellen Ausführungsbeispielen umfasst das mindestens eine Befestigungselement mindestens eine Rast- und/oder Haltezunge, mindestens eine Vertiefung und/oder mindestens einen Spalt jeweils zur Aufnahme einer Rastzunge, mindestens ein Element eines Bajonettverschlusses, eine Haltemanschette und/oder eine Haltetasche.

Gemäß einer vorteilhaften Ausführungsform besteht das mindestens eine Befestigungselement mindestens teilweise aus einem federnden Material, beispielsweise einem Metallblech oder einem Kunststoff. Ein derartiges Befestigungselement eignet sich besonders für eine lösbare Klemmverbindung des Bearbeitungselements mit der Antriebsstange bzw. einem ggf. mit dieser verbundenen Werkzeugelement.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben. Zur Verbesserung der Übersichtlichkeit der Darstellung wird bei mehrfach auftretenden Merkmalen teilweise auf Bezugszeichen verzichtet.

Es zeigen schematisch
- Figur 1:: eine Küchenmaschine mit einem Bearbeitungswerkzeug;
- Figur 2a:: ein Bearbeitungswerkzeug mit Antriebsstange;
- Figur 2b:: ein Bearbeitungselement gemäß einem Ausführungsbeispiel;
- Figur 2c:: das mit der Antriebsstange des Küchenmaschinenwerkzeugs der Figur 2a verbundene Bearbeitungselement der Figur 2b; und
- Figur 3:: einen Küchenmaschinenwerkzeugsatz gemäß einer exemplarischen Ausführungsform der vorliegenden Erfindung.

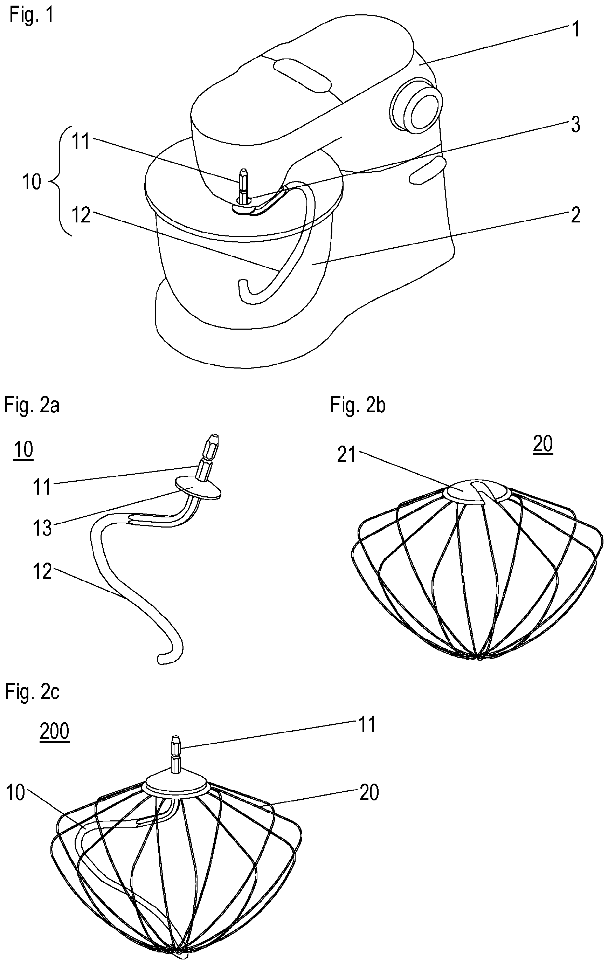

Figur 1 zeigt schematisch eine exemplarische Basisstation 1 einer Küchenmaschine mit einem Rührgefäß 2 sowie einer Einstecköffnung 3, in die eine Antriebstange 11 eingesteckt ist; die Antriebsstange ist dabei dauerhaft mit einem als Knethaken ausgebildeten Werkzeugelement 12 verbunden. Zur Erkennbarkeit der Anordnung ist das durch den Knethaken 12 und die Antriebsstange 11 ausgebildete Bearbeitungswerkzeug 10 durch die übrigen Komponenten der Küchenmaschine hindurchscheinend dargestellt.

Die Basisstation 1 ist elektrisch zu betreiben, insbesondere umfasst sie einen Elektromotor (nicht dargestellt), der dazu eingerichtet ist, die Rotationen des Bearbeitungswerkzeugs 10 anzutreiben.

In der Figur 2a ist das Bearbeitungswerkzeug 10, das einen Kragen 13 zum Verhindern eines Eindringens von Schmutz in die Einstecköffnung 3 Küchenmaschine (siehe Figur 1) umfasst, separat dargestellt.

Figur 2b zeigt ein Ausführungsbeispiel eines erfindungsgemäßen Bearbeitungselements 20, das vorliegend als ein Schneebesen ausgeführt ist und keine eigene Antriebsstange aufweist.

Das Bearbeitungselement 20 umfasst ein Befestigungselement 21 zur lösbaren, drehfesten Verbindung mit einer Antriebsstange, insbesondere mit der Antriebsstange 11 des in der Figur 2a gezeigten Bearbeitungswerkzeug 10.

Das Befestigungselement ist dabei im dargestellten Ausführungsbeispiel als ein Schlitzteller 21 in Form einer gewölbten Scheibe mit einem (bezogen auf die vorgesehene Rotationachse des Bearbeitungselements 20) radial verlaufenden Einschnitt (Schlitz) ausgebildet.

Figur 2c zeigt, wie die Antriebsstange 11 des Bearbeitungswerkzeugs 10 mit dem Bearbeitungselement 20 lösbar verbunden ist: Die Antriebsstange 11 ist dabei durch den Schlitz des Befestigungselements 21 hindurchgeführt, wobei die kantige Form der Antriebsstange 11 die Drehfestigkeit bewirkt, so dass eine Rotation der Antriebsstange sich auf das Bearbeitungselement 20 übertragen kann. Zur verbesserten Fixierung ist ein der Antriebsstange 11 entgegengesetztes Ende des Werkzeugelements 12 in die Drähte des Bearbeitungselements 20 eingehakt.

Der Kragen 13 des Bearbeitungswerkzeugs 10 deckt dabei das als Schlitzteller ausgebildete Befestigungselement 21 ab; gemäß einem vorteilhaften Ausführungsbeispiel besteht der Kragen an seinem Rand mindestens teilweise aus einem flexiblen Kunststoff, so dass er formschlüssig mit einem entsprechend geformten Schlitzteller, insbesondere dem Befestigungselement 21 verbunden werden kann.

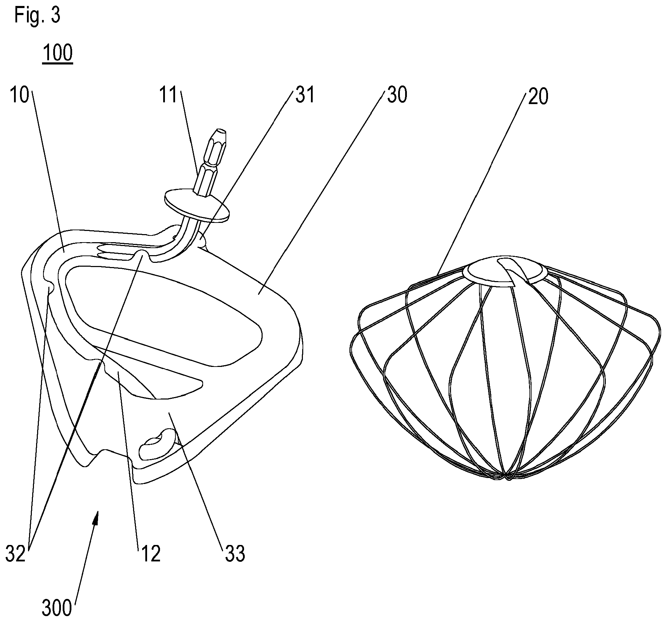

In Figur 3 ist ein Küchenmaschinenwerkzeugsatz 100 einer exemplarischen Ausführungsform der vorliegenden Erfindung dargestellt. Der Küchenmaschinenwerkzeugsatz 100 umfasst das in den Figuren 2b und 2c gezeigte Bearbeitungselement 20, ein weiteres exemplarisches erfindungsgemäßes Bearbeitungselement 30, das vorliegend als ein Flexi-Rührbesen (also als ein Rührbügel, der an seinem radial äußerer Bereich flexible Kunststofflippen 34 aufweist) ausgebildet ist, und
das in den Figuren 2a und 2c dargestellte Bearbeitungswerkzeug 10. Dieses ist in der in Figur 3 gezeigten Situation lösbar mit dem weiteren Bearbeitungselement 30 verbunden, mit dem zusammen es ein Ausführungsbeispiel eines erfindungsgemäßen Küchenmaschinenwerkzeugs 300 bildet.

Insbesondere sind das Bearbeitungselement 20 und das Bearbeitungselement 30 des Küchenmaschinenwerkzeugsatzes 100 somit von unterschiedlichem Typus, nämlich als Schneebesen einerseits und als Flexi-Rührbesen andererseits ausgebildet.

Als Befestigungselemente weist das Bearbeitungselement 30 ein (als Teilring, also nicht geschlossen ausgebildetes) Ringelement 31 auf, durch dessen Zentrum die Antriebsstange 11 geführt ist und mit dem diese vorzugsweise verrastet ist, sowie Halterungselemente 32, 33 für das mit der Antriebsstange 11 verbundene Werkzeugelement 12. Die Halterungselemente umfassen dabei im dargestellten Ausführungsbeispiel drei Haltezungen 32 sowie eine Haltemanschette 33, durch die ein der Antriebsstange entgegengesetztes Ende des Werkzeugelements 12 hindurchgeführt ist. Die Haltezungen 32 bestehen vorzugsweise aus einem nachgiebigen, federnden Material, so dass das Werkzeugelement 12 einerseits leicht eingesetzt und wieder entfernt werden kann, andererseits mittels der Federkraft der Haltezungen in der gezeigten Stellung gehalten wird.

Das Bearbeitungswerkzeug 10 mit der Antriebsstange 11 kann somit wahl- und wechselweise mit dem Bearbeitungselement 20 (wie in Figur 2b gezeigt) oder mit dem Bearbeitungselement 30 (wie in Figur 3 dargestellt) verbunden werden. Zusammen mit dem Bearbeitungswerkzeug 10 umfasst der in der Figur 3 gezeigte Küchenmaschinenwerkzeugsatz 100 somit drei Werkzeuge für eine Küchenmaschine, die alle mittels derselben Antriebsstange 11 zur Rotation gebracht werden können. Auf eigene Antriebsstangen für die Bearbeitungselemente 20 und 30 kann somit verzichtet werden, was eine Raum-, Gewichts- und Materialersparnis bedeutet.

Ein erfindungsgemäßes Bearbeitungselement 20, 30 eines rotierbaren Küchenmaschinenwerkzeugs weist mindestens ein Befestigungselement 21, 31, 32, 33 zur lösbaren, drehfesten Verbindung mit einer Antriebsstange 11 für das Küchenmaschinenwerkzeug auf.

Ein erfindungsgemäßes Küchenmaschinenwerkzeug 200, 300 umfasst ein Bearbeitungselement 20, 30 und eine lösbar und drehfest mit dem Bearbeitungselement verbundene oder zu verbindende Antriebsstange 11.

Ein erfindungsgemäßer Küchenmaschinenwerkzeugsatz 100 umfasst eine Antriebsstange und mindestens zwei lösbar und drehfest mit der Antriebsstange zu verbindende Bearbeitungselemente 20, 30 unterschiedlicher Größe und/oder unterschiedlichen Typs.

Offenbart ist ferner eine Küchenmaschine mit einem Küchenmaschinenwerkzeug 200, 300.

### Bezugszeichen

- 1: Basisstation einer Küchenmaschine
- 2: Rührgefäß
- 3: Einstecköffnung

- 10: Bearbeitungswerkzeug
- 11: Antriebsstange
- 12: Werkzeugelement
- 13: Kragen

- 20, 30: Bearbeitungselement
- 21: Befestigungselement: Schlitzteller
- 31: Befestigungselement: Ringelement
- 32: Befestigungselement: Halterungselement (nämlich Haltezunge)
- 33: Befestigungselement: Halterungselement (nämlich Haltemanschette)
- 34: Kunststofflippe

- 100: Küchenmaschinenwerkzeugsatz
- 200, 300: Küchenmaschinenwerkzeug

## Patentansprüche

1. Küchenmaschinenwerkzeug (200, 300) zur Verwendung als rotierbares Werkzeug einer Küchenmaschine, wobei das Küchenmaschinenwerkzeug ein Bearbeitungselement (20, 30) und ein Bearbeitungswerkzeug (10) umfasst, wobei das Bearbeitungselement (20, 30) ein Befestigungselement (21, 31) aufweist, das mit einer Antriebsstange (11) des Bearbeitungswerkzeuges (10) lösbar und drehfest verbunden oder verbindbar ist, **dadurch gekennzeichet, dass** ein der Antriebsstange (11) entgegengesetztes Ende eines Werkzeugelements (12) mit einem dem Befestigungselement (21, 31) entgegengesetzten Ende des Bearbeitungselements (20, 30) zusammenwirkt, wobei das Werkzeugelement (12) mit der Antriebsstange (11) verbunden ist.

2. Küchenmaschinenwerkzeug (200, 300) nach Anspruch 1, wobei das Befestigungselement (21, 31) als ein Schlitzteller ausgebildet ist.

3. Küchenmaschinenwerkzeug (200, 300) nach Anspruch 1, wobei das Befestigungselement (21, 31) als ein Ringelement ausgebildet ist.

4. Küchenmaschinenwerkzeug (200, 300) nach einem der Ansprüche 2 oder 3, wobei der Schlitzteller und/oder das Ringelement dazu eingerichtet ist, die Antriebsstange (11) ganz oder teilweise zu umgreifen.

5. Küchenmaschinenwerkzeug (200, 300) nach einem der vorhergehenden Ansprüche, wobei die Antriebsstange (11) mit dem Werkzeugelement (12) für die Küchenmaschine verbunden ist und mit diesem ein eigenständiges weiteres Bearbeitungswerkzeug (10) für die Küchenmaschine ausbildet.

6. Küchenmaschinenwerkzeug (200, 300) nach einem der vorhergehenden Ansprüche, wobei das Werkzeugelement (12) als ein Knethaken, ein Rührbügel oder eine Rührschlinge ausgebildet ist.

7. Küchenmaschinenwerkzeugsatz (100) mit einem Küchenmaschinenwerkzeug (200, 300) gemäß einem der vorhergehenden Ansprüche, dessen Bearbeitungselement (20, 30) ein erstes Bearbeitungselement ist, sowie mit mindestens einem zweiten mit der Antriebsstange (11) lösbar und drehfest zu verbindenden Bearbeitungselement (20, 30), das eine andere Größe und/oder einen anderen Typus aufweist als das erste Bearbeitungselement.

8. Küchenmaschine mit einer Basisstation (1) und einem Küchenmaschinenwerkzeug (200, 300) gemäß einem der Ansprüche 1 bis 6.

## Claims

1. Food processor tool (200, 300) for use as a rotatable tool of a food processor, wherein the food processor tool comprises a processing element (20, 30) and a processing tool (10), wherein the processing element (20, 30) has a fastening element (21, 31) which is connected or can be connected to a drive rod (11) of the processing tool (10) in a detachable and rotationally fixed manner, **characterised in that** an end of a tool element (12) opposite the drive rod (11) interacts with an end of the processing element (20, 30) opposite the fastening element (21, 31), wherein the tool element (12) is connected to the drive rod (11).

2. Food processor tool (200, 300) according to claim 1, wherein the fastening element (21, 31) is embodied as a slotted disc.

3. Food processor tool (200, 300) according to claim 1, wherein the fastening element (21, 31) is embodied as a ring element.

4. Food processor tool (200, 300) according to one of claims 2 or 3, wherein the slotted disc and/or the ring element is configured to surround the drive rod (11) entirely or partially.

5. Food processor tool (200, 300) according to one of the preceding claims, wherein the drive rod (11) is connected to the tool element (12) for the food processor and therewith forms a standalone further processing tool (10) for the food processor.

6. Food processor tool (200, 300) according to one of the preceding claims, wherein the tool element (12) is embodied as a kneading hook, a paddle beater or a whisk.

7. Food processor tool set (100) with a food processor tool (200, 300) according to one of the preceding claims, the processing element (20, 30) of which is a first processing element, and with at least one second processing element (20, 30) to be connected to the drive rod (11) in a detachable and rotationally fixed manner, which is of a different size and/or type from the first processing element.

8. Food processor with a base unit (1) and a food processor tool (200, 300) according to one of claims 1 to 6.

## Revendications

1. Ustensile de robot de cuisine (200, 300) à utiliser comme ustensile rotatif d'un robot de cuisine, dans lequel l'ustensile de robot de cuisine comprend un élément de traitement (20, 30) et un ustensile de traitement (10), dans lequel l'élément de traitement (20, 30) présente un élément de fixation (21, 31) relié ou reliable de façon amovible et immobile en rotation à une bielle de commande (11) de l'ustensile de traitement (10), **caractérisé en ce qu'**une extrémité d'un élément d'ustensile (12) opposée à la bielle de commande (11) coopère avec une extrémité de l'élément de traitement (20, 30) opposée à l'élément de fixation (21, 31), dans lequel l'élément d'ustensile (12) est relié à la bielle de commande (11).

2. Ustensile de robot de cuisine (200, 300) selon la revendication 1, dans lequel l'élément de fixation (21, 31) est formé sous la forme d'un plateau à fente.

3. Ustensile de robot de cuisine (200, 300) selon la revendication 1, dans lequel l'élément de fixation (21, 31) est formé sous la forme d'un élément annulaire.

4. Ustensile de robot de cuisine (200, 300) selon l'une des revendications 2 ou 3, dans lequel le plateau à fente et/ou l'élément annulaire est aménagé afin d'entourer intégralement ou partiellement la bielle de commande (11).

5. Ustensile de robot de cuisine (200, 300) selon l'une des revendications précédentes, dans lequel la bielle de commande (11) est reliée à l'élément d'ustensile (12) pour le robot de cuisine et forme avec celui-ci un ustensile de traitement autonome supplémentaire (10) pour le robot de cuisine.

6. Ustensile de robot de cuisine (200, 300) selon l'une des revendications précédentes, dans lequel l'élément d'ustensile (12) est formé sous la forme d'un crochet pétrisseur, d'un batteur en étrier ou d'un batteur vrillé.

7. Kit d'ustensile de robot de cuisine (100) avec un ustensile de robot de cuisine (200, 300) selon l'une des revendications précédentes, dont l'élément de traitement (20, 30) est un premier élément de traitement, ainsi qu'avec au moins un deuxième élément de traitement (20, 30) à relier de façon amovible et immobile en rotation à la bielle de commande (11), qui présente une autre taille et/ou un autre type que le premier élément de traitement.

8. Robot de cuisine avec une station de base (1) et un ustensile de robot de cuisine (200, 300) selon l'une des revendications 1 à 6.
